# EUROPEAN PATENT APPLICATION

(11) **EP 3 012 723 A1**
(43) Date of publication of application: **27.04.2016**
(21) Application number: 15191322.5
(22) Date of filing: 23.10.2015
(51) Int. Cl.: G06F 3/044

(54) **TOUCH SCREEN PANEL AND MANUFACTURING METHOD THEREOF**

(30) Priority: 23.10.2014 KR 20140144331
(71) Applicant: Samsung Display Co., Ltd., Gyeonggi-do (KR)
(72) Inventor: KIM, Kyung Seop, 17113 Gyeonggi-do (KR); KIM, Jae Neung, 17113 Gyeonggi-do (KR); KIM, Cheol Kyu, 17113 Gyeonggi-do (KR); PARK, Sung Kyun, 17113 Gyeonggi-do (KR); CHO, Ki Hyun, 17113 Gyeonggi-do (KR); CHO, Sun Haeng, 17113 Gyeonggi-do (KR)
(74) Representative: Mounteney, Simon James

(57) **Abstract**

A touch screen panel and manufacturing method thereof are disclosed. In one aspect, the touch screen panel includes a substrate, a plurality of first sensing electrodes formed over the substrate in a first direction and a plurality of second sensing electrodes formed over the substrate in a second direction. The touch screen panel also includes at least one insulating layer formed at intersections between the first and second sensing electrodes. The insulating layer has a line shape that extends in one of the first direction and the second direction and crosses the first or second sensing electrodes.

## Description

### BACKGROUND

### Field

The invention generally relates to a touch screen panel and a method of manufacturing the same.

### Description of the Related Technology

Flexible displays are currently in high demand, which results in a high demand for flexible touch screen panels. Accordingly, the technologies required for manufacturing flexible touch screen panels including forming sensing electrodes for sensing contact with flexible thin film substrates have been undergoing development.

### SUMMARY OF CERTAIN INVENTIVE ASPECTS

One aspect of the invention provides a touch screen panel, including a substrate, first sensing electrodes on the substrate along a first direction, second sensing electrodes on the substrate along a second direction, an insulating layer at intersections of the first sensing electrodes and the second sensing electrodes, wherein the insulating layer is patterned in a line shape in the first direction or the second direction and crosses the first or second sensing electrodes.

According to an embodiment of the invention, the insulating layer may include a plurality of insulating layers, patterned in a line shape along the second direction, at predetermined intervals, wherein each of the insulating layers crosses the first sensing electrodes.

According to an embodiment of the invention, at least one of the first sensing electrodes or the second sensing electrodes may have a mesh shape.

According to an embodiment of the invention, each of the first sensing electrodes may include a plurality of first sensing patterns arranged along the first direction and a plurality of first connecting patterns connecting the first sensing patterns in the first direction.

According to an embodiment of the invention, the first connecting patterns may be provided between the substrate and the insulating layer and comprise at least one opaque or semitransparent layer.

According to an embodiment of the invention, the first connecting patterns may have a stacked structure including a metal layer formed below the insulating layer and a transparent conductive layer formed below the metal layer.

According to an embodiment of the invention, the metal layer may have a width that is less than the width of the transparent conductive layer and provided at an inner portion of the area where the transparent conductive layer is formed, wherein the insulating layer completely covers the metal layer, is arranged to expose both ends of the transparent conductive layer and crosses the first connecting patterns.

According to an embodiment of the invention, the first connecting patterns may include at least one metal layer interposed between the substrate and the insulating layer, wherein the insulating layer crosses the metal layer, exposing the both ends of the metal layer.

According to an embodiment of the invention, each of the second sensing electrodes may include a plurality of second sensing patterns arranged along the second direction and a plurality of second connecting patterns, with the insulating layer interposed therebetween, crossing the first connecting patterns and connecting the second sensing patterns along the second direction.

Another aspect of the invention provides a method of manufacturing a touch screen panel, including forming a conductive layer on a substrate, forming a plurality of first connecting patterns by patterning the first conductive layer through a first mask process, forming an insulating layer in a line shape overlapping the plurality of first connecting patterns along a direction crossing the first connecting patterns and exposing both ends of the first connecting patterns through a second mask process, forming a plurality of first sensing patterns connected in a first direction by the first connecting patterns, a plurality of second connecting patterns crossing the first connecting patterns over the insulating layer and a plurality of second sensing patterns connected in a second direction by the second connecting patterns through a third mask process.

According to an embodiment of the invention, the method may include forming the conductive layer to include at least one opaque or semitransparent layer and forming the first connecting patterns including at least one opaque or semitransparent layer by patterning the conductive layer.

According to an embodiment of the invention, the method may include patterning the insulating layer using the first connecting patterns as an alignment key.

According to an embodiment of the invention, the method may include forming the conductive layer in a stacked structure comprising a first conductive layer formed of a transparent conductive material and a second conductive layer formed of a metal material formed over the first conductive layer, forming the first connecting patterns by patterning the first and second conductive layers in a lump using a single mask, wherein each of the first connecting patterns includes a transparent conductive layer and a metal layer formed within an inner portion of an area where the transparent conductive layer is formed at an upper portion of the transparent conductive layer.

According to an embodiment of the invention, the method may include forming the insulating layer using a metal layer of the first connecting patterns as an alignment key, the insulating layer completely covering the metal layer, and patterning the insulating layer to expose both ends of the transparent conductive layer.

According to an embodiment of the invention, the method may include patterning the first sensing patterns, the second sensing patterns and the second connecting patterns in a lump through the third mask process.

Another aspect of the invention provides a touch screen panel, comprising a substrate; a plurality of first sensing electrodes formed over the substrate in a first direction; a plurality of second sensing electrodes formed over the substrate in a second direction; and at least one insulating layer formed at intersections between the first and second sensing electrodes, wherein the insulating layer has a line shape that extends in one of the first direction and the second direction and crosses the first or second sensing electrodes.

In embodiments of the invention, the at least one insulating layer comprises a plurality of insulating layers, each having a line shape that extends in the second direction, wherein the insulating layers are arranged in the first direction at predetermined intervals, and wherein each of the insulating layers crosses the first sensing electrodes. At least one of the first sensing electrodes and the second sensing electrodes can have a mesh shape. Each of the first sensing electrodes can comprise a plurality of first sensing patterns arranged in the first direction; and a plurality of first connecting patterns connecting the first sensing patterns in the first direction.

In embodiments of the invention, the first connecting patterns are interposed between the substrate and the insulating layer and comprise at least one opaque or semitransparent layer. The first connecting patterns can have a stacked structure comprising a metal layer formed below the insulating layer and a transparent conductive layer formed below the metal layer. The metal layer can have a width that is less than the width of the transparent conductive layer and can be formed within an inner portion of the area where the transparent conductive layer is formed, wherein the insulating layer i) completely covers the metal layer, ii) does not cover both ends of the transparent conductive layer and iii) crosses the first connecting patterns.

In embodiments of the invention, the first connecting patterns comprise at least one metal layer interposed between the substrate and the insulating layer, wherein the insulating layer crosses the metal layer and does not cover both ends of the metal layer. Each of the second sensing electrodes can comprise a plurality of second sensing patterns arranged in the second direction; and a plurality of second connecting patterns crossing the first connecting patterns and connecting the second sensing patterns in the second direction, wherein the insulating layer is interposed between the first and second connecting patterns.

Another aspect of the invention provides a method of manufacturing a touch screen panel, comprising forming a conductive layer on a substrate; patterning the conductive layer via a first mask process so as to form a plurality of first connecting patterns; forming at least one insulating layer so as to: i) overlap and cross the first connecting patterns and ii) expose both ends of the first connecting patterns via a second mask process, wherein the insulating layer has a line shape; forming a plurality of first sensing patterns so as to be connected in a first direction by the first connecting patterns; forming a plurality of second connecting patterns over the insulating layer so as to cross the first connecting patterns; and forming a plurality of second sensing patterns so as to be connected in a second direction by the second connecting patterns, wherein the first and second sensing patterns and the second connecting patterns are formed via a third mask process.

In embodiments of the invention, the conductive layer comprises at least one opaque or semitransparent layer and the patterning comprises patterning the at least one opaque or semitransparent layer so as to form the first connecting patterns. The method can further comprise patterning the insulating layer using the first connecting patterns as an alignment key. The forming the conductive layer can comprise forming a first conductive layer with a transparent conductive material; and forming a second conductive layer with a metal material over the first conductive layer so as to form a stacked structure, wherein the forming the first connecting patterns comprises patterning the first and second conductive layers in a lump using a single mask, and wherein each of the first connecting patterns comprises: a transparent conductive layer; and a metal layer formed within an inner portion of the area where the transparent conductive layer is formed and over the transparent conductive layer.

In embodiments of the invention, the forming the insulating layer comprises using a metal layer of the first connecting patterns as an alignment key, wherein the insulating layer is patterned to completely cover the metal layer and to expose both ends of the transparent conductive layer. The method can further comprise patterning the first sensing patterns, the second sensing patterns and the second connecting patterns in a lump via the third mask process.

At least some of the above and other aspects of the invention are set out in the claims.

### BRIEF DESCRIPTION OF THE DRAWINGS

FIG. 1 is a plan view illustrating a touch screen panel according to an embodiment of the invention.
FIG. 2 is a plan view illustrating the main parts of the touch screen panel shown in FIG. 1.
FIG. 3 is a plan view illustrating the main parts of a modified example of the insulating layer shown in FIG. 2.
FIG. 4 is a cross-sectional view illustrating an example of a cross section along I-I' of FIG. 2.
FIG. 5 is a cross-sectional view illustrating another example of a cross section along I-I' of FIG. 2.
FIGS. 6A to 6D are cross-sectional views sequentially illustrating a method of manufacturing the touch screen panel shown in FIG. 4.
FIGS. 7A to 7D are cross-sectional views sequentially illustrating a method of manufacturing the touch screen panel shown in FIG. 5.

### DETAILED DESCRIPTION

Example embodiments of the invention will now be described more fully hereinafter with reference to the accompanying drawings; however, the invention may be embodied in different forms and should not be construed as limited to the embodiments set forth herein. Rather, these embodiments are provided so that this disclosure will be thorough, and will fully convey how to implement the invention to those skilled in the art.

In the drawings, dimensions may be exaggerated for the sake of clarity. It will be understood that when an element is referred to as being "between" two elements, it can be the only element between the two elements, or one or more intervening elements may also be present. Like reference numerals refer to like elements throughout.

In the following detailed description, only certain embodiments of the invention have been shown and described, simply by way of illustration. As those skilled in the art would realize, the described embodiments may be modified in various different ways, all without departing from the scope of the invention. Accordingly, the drawings and description are to be regarded as illustrative in nature and not restrictive. In addition, when an element is referred to as being "on" other element, it can be directly on the another element or be indirectly on the other element with one or more intervening elements interposed therebetween. Further, it will be understood that when a layer is referred to as being "under" another layer, it can be directly under or one or more intervening layers may also be present. In addition, it will also be understood that when a layer is referred to as being "between" two layers, it can be the only layer between the two layers or one or more intervening layers may also be present. Also, when an element is referred to as being "connected to" other element, it can be directly connected to the other element or indirectly connected to the other element with one or more intervening elements interposed therebetween. Hereinafter, like reference numerals refer to like elements. In the drawings, the thickness or size of layers may be exaggerated for the sake of clarity and are not necessarily drawn to scale.

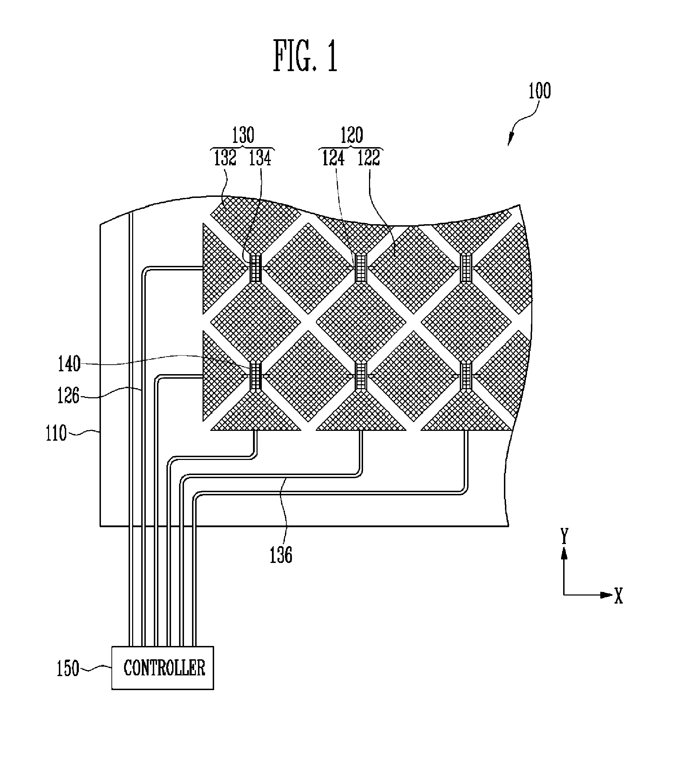

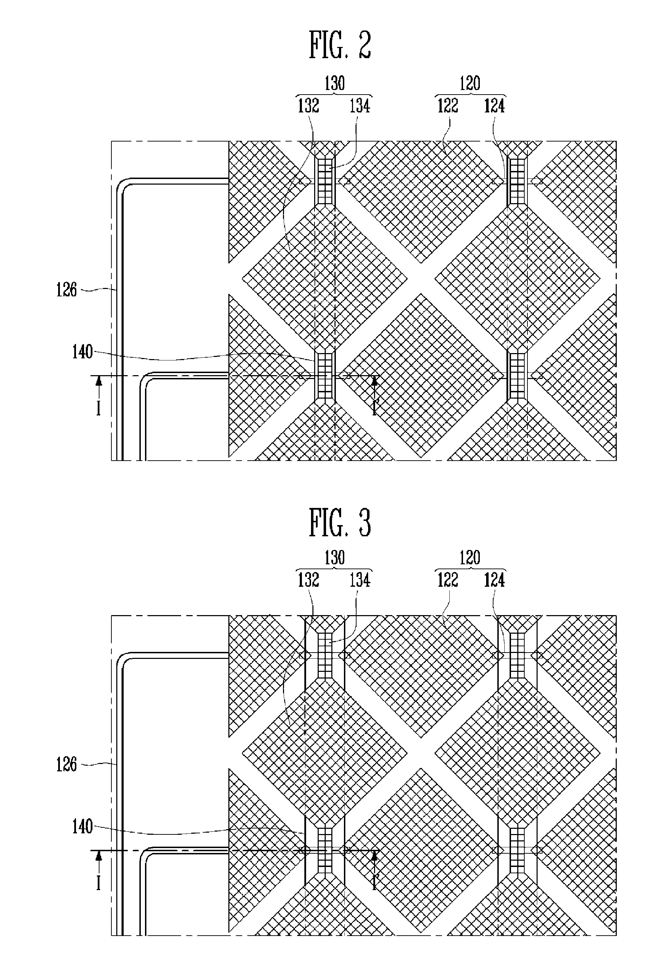

FIG. 1 is a plan view illustrating a touch screen panel according to an embodiment of the invention. FIG. 2 is a plan view illustrating the main parts of the touch screen panel shown in FIG. 1. FIG. 3 is a plan view illustrating the main parts of a modified example of the insulating layer shown in FIG. 2.

Referring to FIG. 1, a touch screen panel 100 according to this embodiment includes first sensing electrodes 120 and second sensing electrodes 130 formed in different directions on a substrate 110, first wires 126 and second wires 136 respectively connected to the first and second sensing electrodes 120 and 130, and a controller 150 connected to the first and second sensing electrodes 120 and 130 via the first and second wires 126 and 136.

The substrate 110 may be a substrate formed of a flexible film material. For example, the substrate 110 may be a polycarbonate (PC) substrate processed to be about 50 µm thick or less.

When the substrate 110 is formed of a thin and flexible film material, a flexible touch screen panel that can be bent or folded can be manufactured.

However, the described technology is not limited thereto. The substrate 110 can be formed of various materials and may have a different thickness depending on the intent of or design choice made by a manufacturer.

The first sensing electrodes 120 are formed along a first direction. The second sensing electrodes 130 are formed along a second direction. The second direction may cross the first direction. For example, the first direction may be an X direction and the second direction may be a Y direction.

When the first sensing electrodes 120 and the second sensing electrodes 130 are formed in different directions, the position of touch input can be easily detected.

Each of the first sensing electrodes 120 includes a plurality of first sensing patterns 122 arranged along the first direction and a plurality of first connecting patterns 124 connecting the first sensing patterns 122 along the first direction.

For example, each of the first sensing electrodes 120 may include the first sensing patterns 122 separated from each other, as in the form of islands, spaced apart at fixed intervals along the first direction and the first connecting patterns 124 connecting the first sensing patterns 122 in the first direction.

Both ends of each of the first connecting patterns 124, provided between adjacent first sensing patterns 122 in the first direction, may be directly or indirectly in contact with and connected to the first sensing patterns 122 and may connect the first sensing patterns 122 in the first direction.

Each of the second sensing electrodes 130 includes a plurality of second sensing patterns 132 arranged along the second direction and a plurality of second connecting patterns 134 connecting the second sensing patterns 132 in the second direction.

For example, each of the second sensing electrodes 130 includes the second sensing patterns 132 arranged alternately with the first sensing patterns 122 in the second direction and the second connecting patterns 134 connected to the second sensing patterns 132 in a single body along the second direction.

Both ends of each of the second connecting patterns 134, provided between adjacent second sensing patterns 132 in the second direction, connect the second sensing patterns 132 in the second direction as they are connected to the second sensing patterns 132 in a single body.

In this embodiment, the first connecting patterns 124 are formed as bridge patterns and the second connecting patterns 134 are formed as a connecting portion connected in a single body between the second sensing patterns 132.

However, the described technology is not limited thereto. For example, the first connecting patterns 124 can be formed as the connecting portion and the second connecting patterns 134 can be formed as the bridge patterns. Alternatively, the first and second connecting patterns 124 and 134 can both be formed as bridge patterns. They can be designed in a variety of ways.

The first and second sensing electrodes 120 and 130 or the first or second sensing electrodes 120 or 130 are formed in the shape of a mesh, for example, they are formed as metal mesh electrodes.

For example, the first and second sensing patterns 122 and 132 are a plurality of fine metal lines having a substantially mesh shape and the second connecting patterns 134 connected to the second sensing patterns 132 in a single body also have a mesh form.

When the first and the second sensing electrodes 120 and 130 or the first or the second sensing electrodes 120 or 130 are designed with mesh-shaped metal electrodes, the flexibility and durability of the sensing electrodes 120 and 130 can be enhanced and a sufficient permeability can be provided, and as a result, they can be applied to flexible touch screen panel.

Particularly, when the first and second sensing electrodes 120 and 130 or the first or second sensing electrodes 120 or 130 are formed of metal mesh electrodes using silver (Ag) or copper (Cu), the sensing electrodes 120 and 130 flexibility and durability may be superior to traditional electrodes while providing a low resistance for the sensing electrodes 120 and 130.

Further, an insulating layer 140 is formed at the intersections between the first and second sensing electrodes 120 and 130 to electrically insulate the sensing electrodes 120 and 130 from each other.

Particularly, the insulating layer 140 is interposed between at least the first and second connecting patterns 124 and 134. The first and second connecting patterns 124 and 134 extend in their respective directions where they cross each other.

The first wires 126 are connected to the first sensing electrodes 120 based on a line by line basis in the first direction, for example, based on a row line basis, connecting the first sensing electrodes 120 to the controller 150. The second wires 136 are connected to the second sensing electrodes 130 based on a line by line basis in the second direction, for example, based on a column line basis, connecting the second sensing electrodes 130 to the controller 150.

The first and second wires 126 and 136, or the first or second wires 126 or 136 may be formed of a material that is the same as a material for the first and second sensing patterns 122 and 132 or the first or second sensing patterns 122 or 132 in the same formation process. Alternatively, the first and second wires 126 and 136 or the first or second wires 126 or 136 may be formed of a material that is the same as a material for the first connecting patterns 124 in the same formation process. Here, since the first and second wires 126 and 136 or the first or second wires 126 or 136 can be formed at the same time as the first and second sensing electrodes 120 and 130 are formed, the manufacturing process can be simplified.

The controller 150 supplies driving signals to the first and second sensing electrodes 120 and 130 or the first or second sensing electrodes 120 or 130 via the first and second wires 126 and 136 or the first or second wires 126 or 136. The controller 150 detects touch input in response to detection signals received from the first and second sensing electrodes 120 and 130 or the first or second sensing electrodes 120 or 130.

In this embodiment, in the touch screen panel 100, the insulating layer 140 crosses a plurality of first or second sensing electrodes 120 or 130 by being patterned in the shape of a line in the first direction or the second direction. The insulating layer 140 can be formed as a striped line insulating layer.

The insulating layer 140 is formed to cross the first sensing electrodes 120 along a direction crossing the first connecting patterns 124, exposing both ends of the first connecting patterns 124 having the bridge patterns.

For example, the insulating layer 140 is patterned to have the shape of a line along the second direction as illustrated in FIGS. 1 and 2 and is arranged at a plurality of fixed intervals along the first direction crossing the second direction.

The insulating layer 140 can be formed such that at least one line insulating layer crosses a plurality of first sensing electrodes 120 arranged in a corresponding column line per column line. A plurality of insulating layers 140 can be formed spaced apart at fixed intervals in the first direction.

Each of the insulating layers 140 has a greater width than the second connecting patterns 134 such that the first sensing electrodes 120 are stably insulated from the second sensing electrodes 130. However, the width, length, and the like of the insulating layer 140 can be implemented in a variety of ways.

For example, the insulating layer 140 can have a relatively small width considering the least error range that may occur on the left and right sides of the second connecting patterns 134 during their manufacturing. Accordingly, a sufficient contact region between the first sensing patterns 122 and the first connecting patterns 124 can be formed.

In another embodiment, the insulating layer 140, as illustrated in FIG. 3, has a relatively greater width such that spaces between the adjacent first sensing patterns 122 are substantially covered. Here, at the intersections between the first and second sensing electrodes 120 and 130, the insulating layer 140 sufficiently insulated the first and second sensing electrodes 120 and 130 from each other.

The width of the insulating layer 140 can be set to sufficiently insulate the first and second sensing electrodes 120 and 130 from each other and to provide a contact region between the first sensing patterns 122 and the first connecting patterns 124, considering the error range that may occur in a manufacturing process thereof.

In this embodiment, the first connecting patterns 124 include at least one opaque layer such as a metal layer or at least one semitransparent layer and are provided on a lower portion of the insulating layer 140. For example, the first connecting patterns 124 may be a single metal layer including a metal material such as Cu or may include a stacked structure including a metal layer and a transparent conductive layer of a transparent conductive material such as ITO provided on the lower portion of the metal layer.

The first connecting patterns 124 may be opaque and may be located between the substrate 110 and the insulating layer 140. However, although the first connecting patterns 124 may be opaque, they may be patterned to have narrow width and length such that users of the display cannot see the first connecting patterns 124.

When the first connecting patterns 124 are opaque, the first connecting patterns 124 can be used as alignment keys during manufacturing the touch screen panel 100 and the insulating layer 140 can be formed over the first connecting patterns 124 to have a substantially line shape. An alignment error that may occur in a manufacturing process can be prevented, thereby improving the manufacturing defective rate.

Even when various patterns are formed for detecting touch on the substrate 110 of the film material where heat expansion can easily occur, the accuracy of pattern formation can be increased.

In this embodiment, the insulating layer 140 having a line shape in the direction crossing the first connecting patterns 124 is formed using the first connecting patterns 124 as alignment keys which are implemented with bridge patterns that include metal layer, and the like. Alignment errors can thus be avoided when forming the insulating layer 140, the first and second sensing patterns 122 and 132 and the second connecting patterns 134 on the upper portion of the insulating layer 140.

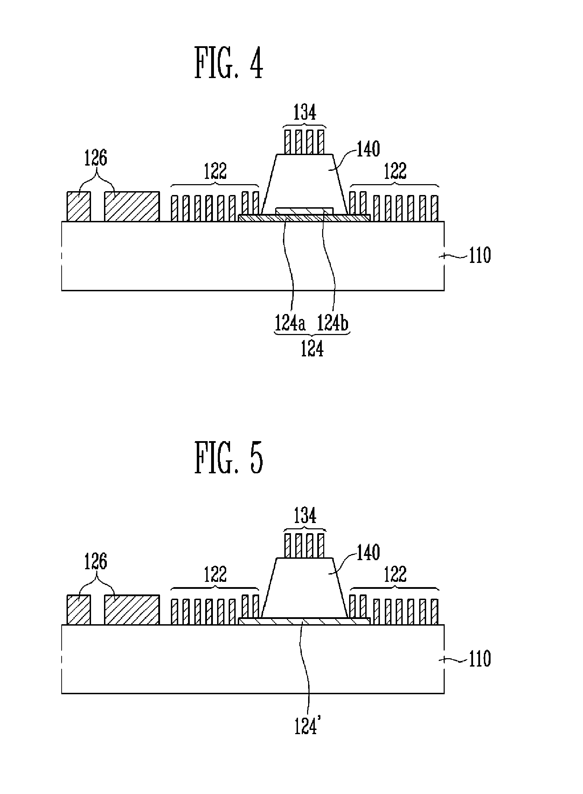

FIG. 4 is a cross-sectional view illustrating an example of a cross section along I-I' of FIG. 2. FIG. 5 is a cross-sectional view illustrating another example of a cross section along I-I' of FIG. 2.

In describing FIGS. 4 and 5, the same reference numerals will be used for the same or similar portions from FIGS. 1 to 3. Detailed description relating thereto will be omitted.

In FIGS. 4 to 5, although only each of the first connecting patterns 124 and 124' and the second connecting patterns 134 is shown, there may be a plurality of the first connecting patterns 124 and 124' and the second connecting patterns 134 formed on the substrate 110 as shown in FIGS. 1 to 3. Hereinafter, when the first and second connecting patterns 124 and 134 are described, each of them may be described as though there are a plurality thereof.

Referring to FIG. 4, each of the first connecting patterns 124 includes, for example, a stacked structure including a metal layer 124b formed below the insulating layer 140 and a transparent conductive layer 124a formed below the metal layer 124b.

The transparent conductive layer 124a may be formed of a transparent conductive material such as ITO, IZO, AZO, GZO, ZnO, or the like, or a combination thereof.

The metal layer 124b may be formed of a low-resistant metal material such as Cu, Al, Mo, Ti, Ag, Au, Ni, Cr, Fe, Zn, In, Ga, or the like, or a combination thereof.

When the first connecting patterns 124 are formed as at least a double layered structure including the transparent conductive layer 124a and the metal layer 124b, the first connecting patterns 124 can have a reduced resistance when compared to a bridge pattern including a single transparent conductive layer.

Even if the first connecting patterns 124 are formed as at least a double layered structure as shown in an embodiment in FIG. 4, by etching and patterning the transparent conductive layer 124a and the metal layer 124b in a lump through a mask process using a single mask, the number of masks can be reduced and the manufacturing process can be simplified.

In this embodiment, the degree to which the metal layer 124b is etched is greater than the transparent conductive layer 124a. Therefore, when viewed from a planar view, the metal layer 124b is formed within an inner portion of an area where the transparent conductive layer 124a is formed while having narrower width and area than the transparent conductive layer 124a.

The insulating layer 140 having a line shape that crosses the first connecting patterns 124 and exposes both ends of the first connecting patterns 124 is formed as shown in FIGS. 1 to 3.

For example, the insulating layer 140 substantially completely covers the metal layer 124b of the first connecting patterns 124 and is patterned to cross the first connecting patterns 124 and expose both ends of the transparent conductive layer 124a of the first connecting patterns 124.

However, the described technology is not limited thereto. That is, the first connecting patterns 124 do not have to be formed as at least a double layered structure including the transparent conductive layer 124a and the metal layer 124b. For example, the first connecting patterns 124' may include at least one metal layer as shown in FIG. 5.

For example, the first connecting patterns 124' can be formed as a single layered metal layer interposed between the substrate 110 and the insulating layer 140.

In the FIG. 5 embodiment, the insulating layer 140 is patterned in a line shape crossing the first connecting patterns 124' while exposing both ends of the first connecting patterns 124', that is, the metal layer.

The insulating layer 140 may be formed of an organic insulating layer and may be formed of AlOx, SiOx, SiNx, TiOx or the like, or a combination thereof. In some embodiments, the insulating layer 140 is formed as a film by a low temperature sputtering method.

The insulating layer 140 is formed to have a substantially line shape that crosses the first connecting patterns 124 and 124'. When compared to the insulating layer having a dot shape, the insulating layer having a substantially line shape has fewer alignment errors.

The second connecting patterns 134 crossing the first connecting patterns 124 and 124' can be formed over the insulating layer 140. For example, the second connecting patterns 134 may be formed as a single body with the second sensing patterns 132 as shown in FIGS. 1 to 3. In other words, the second connecting patterns 134 can be integrally formed with the second sensing patterns 132.

The first sensing patterns 122 can directly or indirectly contact both ends of the first connecting patterns 124 and 124'. Both ends of the first connecting patterns 124 and 124' are exposed by the insulating layer 140. The first sensing patterns 122 are connected in the first direction by the first connecting patterns 124 and 124'.

The first sensing patterns 122, the second sensing patterns 132 and/or the second connecting patterns 134 can be formed to have a substantially metal mesh shape including a plurality of fine metal lines.

The first sensing patterns 122, the second sensing patterns 132 and/or the second connecting patterns 134 can be formed of, for example, metal nano wire including silver nano wire (AgNW), or a low resistant metal material such as Cu, Al, Mo, Ti, Ag, Au, Ni, Cr, Fe, Zn, In, Ga or the like, or a combination thereof.

The first sensing patterns 122, the second sensing patterns 132 and/or the second connecting patterns 134 can be patterned by being etched in a lump using one mask. Here, the width of the fine metal lines that make up the first sensing patterns 122, the second sensing patters 132 and/or the second connecting patters 134 can be about 5 µm or less, for example, thereby preventing visibility to actual users.

By setting the area occupied by the metal layer 124b that is included in the first connecting patterns 124 and 124' and the first and second sensing patterns 122 and 132 and the second connecting patterns 134 to about 3% or less of the entire activation area, each of the metal layer 124b and the first and second sensing patterns 122 and 132 will not be visible to a user of the display.

The external wires such as the first wires 126 can be formed in the non-activation area surrounding the activation area where the first and second sensing electrodes 120 and 130 are formed. The first wires 126 and the like can be patterned in the same process and with the same material as the first sensing patters 122, the second sensing patterns 132 and the second connecting patterns 134. Alternatively, the first wires 126 and the like can be patterned in the same process and with the same material as the first connecting patterns 124 and 124'.

By forming the insulating layer 140 having a substantially line shape that crosses the first connecting patterns 124 and 124', alignment error can be minimized even when forming patterns for sensing touch on the substrate 110 made of film material and the like.

Resistance (i.e., the electrical resistance of the first sensing electrodes 120) can be reduced by forming the first connecting patterns 124 with double layered bridge patterns including the transparent conductive layer 124a and the metal layer 124b. Also, the number of masks can be reduced and the manufacturing process can be simplified by patterning the transparent conductive layer 124a and the metal layer 124b in a lump using one mask.

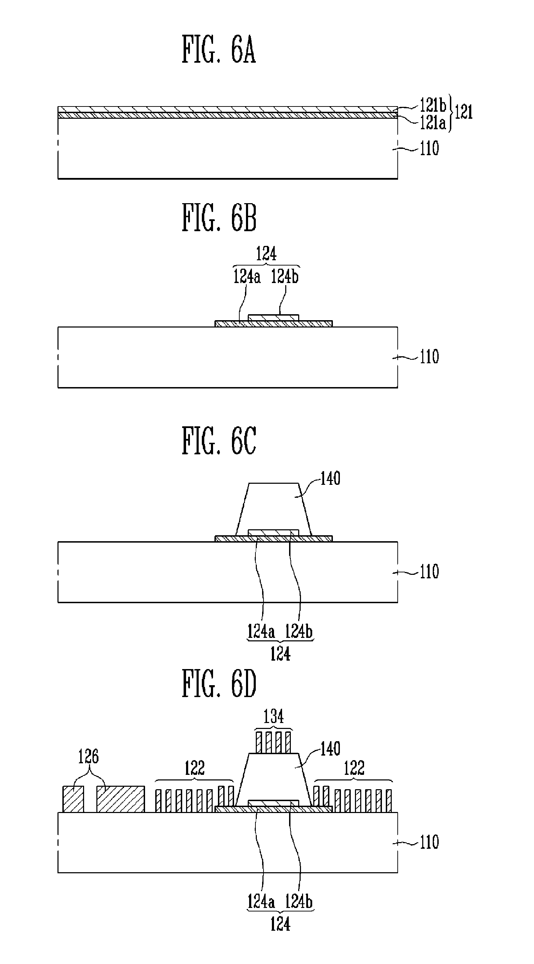

FIGS. 6A to 6D are cross-sectional views sequentially illustrating a method of manufacturing the touch screen panel shown in FIG. 4.

Referring to FIGS. 6A to 6D, the method of manufacturing the touch screen panel shown in FIG. 4 is described. A conductive layer 121 can be formed on the substrate 110 as shown in FIG. 6A.

The conductive layer 121 includes at least one opaque or semitransparent layer. For example, the conductive layer 121 can include a stacked structure including a first conductive layer 121a formed of a transparent conductive material and a second conductive layer 121b formed of a metal material provided on an upper portion of the first conductive layer 121a.

The first connecting patterns 124 patterned as shown in FIG. 6B are formed by etching and patterning the first and second conductive layers 121a and 121b in a lump through a first mask process using a single first mask (not shown). When the first and second conductive layers 121a and 121b are etched in a lump, the number of masks can be reduced and the manufacturing process can be simplified.

When the first conductive layer 121a and the second conductive layer 121b are etched in a lump using the first mask and an integrated etchant, the degree of which the second conductive layer 121b is etched may be relatively great.

Therefore, each of the patterned first connecting patterns 124 can include a transparent conductive layer 124a and a metal layer 124b provided inside the area where the transparent conductive layer 124a is formed on the upper portion of the transparent conductive layer 124a.

After patterning the first connecting patterns 124, the insulating layer 140 can be formed to have a substantially line shape which overlaps the first connecting patterns 124 in a direction crossing the first connecting patterns 124, through a second mask process using a second mask (not shown). The insulating layer 140 exposes both ends of the first connecting patterns 124, particularly both ends of the transparent conductive layer 124a as shown in FIG. 6C.

The insulating layer 140 can be easily patterned using the metal layer 124b and the like of the first connecting patterns 124 as an alignment key. For example, the insulating layer 140 can be formed using the metal layer 124b as an alignment key, the insulating layer 140 completely covering the metal layer 124b, and the insulating layer 140 can be patterned to have a width enough to expose both ends of the transparent conductive layer 124a.

When the insulating layer 140 is patterned to have a substantially line shape, alignment errors can be reduced compared to when the insulating layer 140 is patterned to have a dot form.

The insulating layer 140 having superior insulation characteristics can be formed by coating an organic film with superior insulating characteristics or by forming a film using a low temperature sputtering method on AlOx and the like.

The first sensing patterns 122 connected in the first direction by the first connecting patterns 124, the second connecting patterns 134 crossing the first connecting patterns 124 on the upper portion of the insulating layer 140, and the second sensing patterns 132 connected in the second direction with the second connecting patterns 134 in a single body, for example, can be formed by a third mask process using a third mask (not shown) as shown in FIG. 6D.

Here, the first and second sensing patterns 122 and 132 and the second connecting patterns 134 can be patterned in a lump using a single third mask. They may be patterned in a mesh form.

By forming the insulating layer 140 to have a substantially line shape crossing the first connecting patterns 124 using the first connecting patterns 124 as an alignment key, alignment errors that may occur in a process can be minimized.

In addition, the resistance can be reduced by forming the first connecting patterns 124 with a double layered structure including the transparent conductive layer 124a and the metal layer 124b. By patterning the transparent conductive layer 124a and the metal layer 124b in a lump using one mask, the number of masks can be reduced and the manufacturing process can be simplified.

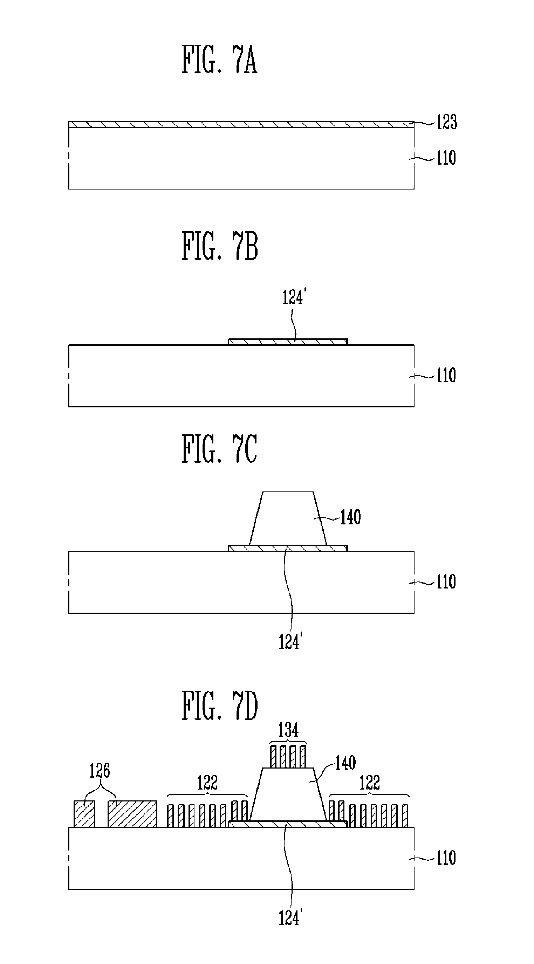

FIGS. 7A to 7D are cross-sectional views sequentially illustrating a method of manufacturing the touch screen panel shown in FIG. 5. In describing FIGS 7A to 7D, same reference numerals will be used for the same or similar portions from FIGS. 6A to 6D. Detailed description relating thereto will be omitted.

Referring to FIGS. 7A to 7D, a conductive layer 123 including a single layered opaque or semitransparent layer can be formed on the substrate 110, and first connecting patterns 124' including a single layered opaque or semitransparent layer can be formed by patterning the conductive layer 123.

For example, the conductive layer 123 formed of a single metal layer can be formed on the substrate 110 and the first connecting patterns 124' including a single metal layer can be formed by patterning the conductive layer 123.

The insulating layer 140 can be formed on the first connecting patterns 124' using the first connecting patterns 124' as an alignment key. Particularly, the insulating layer 140 can be patterned to have a substantially line shape crossing the first connecting patterns 124' and exposing both ends of the first connecting patterns 124'.

As such, patterns for sensing touch can be formed using a small number of masks and alignment errors may be minimized.

By way of summation and review, a method of manufacturing a flexible touch screen panel has been disclosed. In the method, sensing electrodes for sensing touch are formed on a flexible film substrate.

However, when the sensing electrodes are formed on the film substrate, it may be difficult to perform a manufacturing process as the film substrate expands due to heat. For example, at intersections between the first sensing electrodes and second sensing electrodes arranged in different directions, there may be an insulating layer formed having a dot pattern. The insulating layer insulates the first sensing electrodes and the second sensing electrodes from each other. It may be difficult to accurately align the insulating layer and the electrode patterns on the upper portion of the insulating layer at the time of expansion due to heat. Accordingly, alignment errors may easily occur, and as a result, the defective rate of the manufacturing process may increase.

Meanwhile, in order to pattern the first sensing electrodes and the second sensing electrodes and the insulating layer and the bridge pattern provided at the crossing section of the first sensing electrodes and the second sensing electrodes, and the like into predetermined patterns, respectively, a plurality of masks may be used. However, the increase in the number of masks may lead to an increase in the manufacturing cost.

According to the touch screen panel and the method of manufacturing the same according to an embodiment, by forming the insulating layer to have a substantially line shape crossing the first connecting patterns, alignment errors that may occur when forming patterns for sensing touch can be minimized.

Also, the electrical resistance can be reduced by forming the first connecting patterns into double layered bridge patterns of the transparent conductive layer and the metal layer and by patterning the transparent conductive layer and the metal layer in a lump using one mask, the number of masks can be reduced and the manufacturing process can be simplified.

Example embodiments of the invention have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A touch screen panel, comprising:
a substrate;
a plurality of first sensing electrodes formed over the substrate in a first direction;
a plurality of second sensing electrodes formed over the substrate in a second direction; and
at least one insulating layer formed at intersections between the first and second sensing electrodes,
wherein the insulating layer has a line shape that extends in one of the first direction and the second direction and crosses the first or second sensing electrodes.

2. A touch screen panel according to claim 1, wherein the at least one insulating layer comprises a plurality of insulating layers, each having a line shape that extends in the second direction, wherein the insulating layers are arranged in the first direction at predetermined intervals, and wherein each of the insulating layers crosses the first sensing electrodes.

3. A touch screen panel according to claim 1 or 2, wherein, at least one of the first sensing electrodes and the second sensing electrodes has a mesh shape.

4. A touch screen panel according to any preceding claim, wherein each of the first sensing electrodes comprises:
a plurality of first sensing patterns arranged in the first direction; and
a plurality of first connecting patterns connecting the first sensing patterns in the first direction.

5. A touch screen panel according to claim 4, wherein the first connecting patterns are interposed between the substrate and the insulating layer and comprise at least one opaque or semitransparent layer.

6. A touch screen panel according to claim 5, wherein the first connecting patterns have a stacked structure comprising a metal layer formed below the insulating layer and a transparent conductive layer formed below the metal layer.

7. A touch screen panel according to claim 6, wherein the metal layer has a width that is less than the width of the transparent conductive layer and is formed within an inner portion of the area where the transparent conductive layer is formed, wherein the insulating layer i) completely covers the metal layer, ii) does not cover both ends of the transparent conductive layer and iii) crosses the first connecting patterns.

8. A touch screen panel according to claim 4, wherein the first connecting patterns comprise at least one metal layer interposed between the substrate and the insulating layer, wherein the insulating layer crosses the metal layer and does not cover both ends of the metal layer.

9. A touch screen panel according to one of claims 4 to 8, wherein each of the second sensing electrodes comprises:
a plurality of second sensing patterns arranged in the second direction; and
a plurality of second connecting patterns crossing the first connecting patterns and connecting the second sensing patterns in the second direction,
wherein the insulating layer is interposed between the first and second connecting patterns.

10. A method of manufacturing a touch screen panel, comprising:
forming a conductive layer on a substrate;
patterning the conductive layer via a first mask process so as to form a plurality of first connecting patterns;
forming at least one insulating layer so as to: i) overlap and cross the first connecting patterns and ii) expose both ends of the first connecting patterns via a second mask process, wherein the insulating layer has a line shape;
forming a plurality of first sensing patterns so as to be connected in a first direction by the first connecting patterns;
forming a plurality of second connecting patterns over the insulating layer so as to cross the first connecting patterns; and
forming a plurality of second sensing patterns so as to be connected in a second direction by the second connecting patterns,
wherein the first and second sensing patterns and the second connecting patterns are formed via a third mask process.

11. A method according to claim 10, wherein the conductive layer comprises at least one opaque or semitransparent layer and wherein the patterning comprises patterning the at least one opaque or semitransparent layer so as to form the first connecting patterns.

12. A method according to claim 11, further comprising patterning the insulating layer using the first connecting patterns as an alignment key.

13. A method according to claim 10, 11 or 12, wherein the forming the conductive layer comprises:
forming a first conductive layer with a transparent conductive material; and
forming a second conductive layer with a metal material over the first conductive layer so as to form a stacked structure,
wherein the forming the first connecting patterns comprises patterning the first and second conductive layers in a lump using a single mask, and
wherein each of the first connecting patterns comprises:
a transparent conductive layer; and
a metal layer formed within an inner portion of the area where the transparent conductive layer is formed and over the transparent conductive layer.

14. A method according to claim 13, wherein the forming the insulating layer comprises using a metal layer of the first connecting patterns as an alignment key, wherein the insulating layer is patterned to completely cover the metal layer and to expose both ends of the transparent conductive layer.

15. A method according to one of claims 10 to 14, further comprising patterning the first sensing patterns, the second sensing patterns and the second connecting patterns in a lump via the third mask process.
